(19) Europäisches Patentamt / European Patent Office / Office européen des brevets

(11) **EP 3 385 852 B1**

(12) **EUROPEAN PATENT SPECIFICATION**

(45) Date of publication and mention
of the grant of the patent:
**01.04.2020 Bulletin 2020/14**

(21) Application number: **16870382.5**

(22) Date of filing: **04.11.2016**

(51) Int Cl.:
*H04W 4/38* (2018.01)  *H04W 4/70* (2018.01)
*H04L 29/08* (2006.01)  *G06F 13/00* (2006.01)
*G06F 13/10* (2006.01)  *H04M 11/00* (2006.01)

(86) International application number:
**PCT/JP2016/082845**

(87) International publication number:
**WO 2017/094442 (08.06.2017 Gazette 2017/23)**

(54) **DATA FLOW CONTROL APPARATUS AND DATA FLOW CONTROL METHOD**

DATENFLUSSSTEUERUNGSVORRICHTUNG UND DATENFLUSSSTEUERUNGSVERFAHREN

APPAREIL DE COMMANDE DE FLUX DE DONNÉES ET PROCÉDÉ DE COMMANDE DE FLUX DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2015 JP 2015236879**

(43) Date of publication of application:
**10.10.2018 Bulletin 2018/41**

(73) Proprietor: **Omron Corporation
Kyoto-shi, Kyoto 600-8530 (JP)**

(72) Inventor: **YAMATO Tetsuji
Kyoto-shi
Kyoto 600-8530 (JP)**

(74) Representative: **Hoffmann Eitle
Patent- und Rechtsanwälte PartmbB
Arabellastraße 30
81925 München (DE)**

(56) References cited:
EP-A1- 2 801 962      WO-A1-2013/024673
WO-A2-2014/108728

• ANKUR DESHWAL ET AL: "Information as a service based architectural solution for WSN", COMMUNICATIONS IN CHINA (ICCC), 2012 1ST IEEE INTERNATIONAL CONFERENCE ON, IEEE, 15 August 2012 (2012-08-15), pages 68-73, XP032268094, DOI: 10.1109/ICCCHINA.2012.6356972 ISBN: 978-1-4673-2814-2
• KABADAYI SANEM et al.: "Virtual Sensors: Abstracting Data from Physical Sensors", 2006 International Symposium on a World of Wireless, Mobile and Multimedia Networks, 2006, pages 1-6, XP058152909,
• MIYUKI OZAWA: "Unified Physical/Virtual Sensor Messaging System", IEICE Technical Report, vol. 113, 11 December 2013 (2013-12-11), pages 243-248, XP009510687,

**Description**

TECHNICAL FIELD

The present invention relates to a technology for controlling a dataflow that provides data obtained in a device such as a sensor to an application that uses the data.

RELATED ART

Currently, an IT environment called M2M Cloud is attracting attention. M2M (Machine to Machine) refers to a system in which machines having various applications, sizes and performances exchange information over a network. By using this information, appropriate control of each machine and situation analysis of the real world become possible. As a result of factors such as improvement in wireless communication technologies that support M2M, miniaturization of machines and cost reductions, expectations for implementation are building.

M2M Cloud is the platform that realizes such M2M technologies in a cloud computing environment. This provides basic functions required in M2M, such as services ranging from data collection and storage to processing and analysis, as applications on a cloud, enabling use from anywhere. Collective management of data can enhance reliability and completeness. Also, for users, there is the advantage of being able to use as much collected data and as many computer resources as needed. Thus, it is possible to analyze big data and obtain added value without building a system individually, and application in a wide range of fields is expected.

Also, as shown in Patent Document 1, a technology called a sensor network is being investigated. This technology enables collection, management and seamless use of sensing data, by installing sensor devices (hereinafter, also referred to simply as "sensors") having a sensing function and a communication function in various locations, movable bodies, industrial facilities and the like, and networking these sensors.

Usually, sensors are installed in order to collect data that is required by the entity that owns the sensors. Thus, it is often the case that the sensing data is not used (the sensors themselves are not operating or the sensing data is not used even when the sensors are operating) except when data is collected by the entity that owns the sensors. Thus, the distributability of the sensing data is low, and no matter how significant the data is to a third party, analysis and use is limited to the entity that owns the sensors. As a result, this leads to overlapping investment of facilities and network congestion due to communication with individually installed sensors.

Also, a technology called IoT (Internet of Things) is being investigated. This technology produces new value by combining information relating to many things that exist in the world over a network, and seamless deployment of various services including social infrastructure is expected. In order to produce value from IoT, the condition of the things that are connected to the network needs to be known, and sensing and communication are thus important element technologies.

Non patent document Information as a Service Based Architectural Solution for WSN (Ankur Deshwal, Soma Kohli, Chethan .K.P), First IEEE International Conference on Communications in China: Advanced Internet and Cloud pertains wireless sensors. In particular, in the publication IaaS paradigm of Cloud Computing in virtualization of sensor networks is presented.

Patent document EP 2 801 962 A1 discloses a data flow control order generating apparatus that includes: a sensor side metadata acquisition unit acquiring sensor side metadata as information related to a sensor that outputs sensing data; an application side metadata acquisition unit acquiring application side metadata as information related to an application that provides a service by using the sensing data; a matching unit performing matching between the sensor side metadata and the application side metadata to extract the sensor capable of providing the sensing data that satisfies the request of the application; and an instruction unit transmitting a data flow control order that identifies the sensor extracted by the matching unit and the application to a sensor managing apparatus that manages the sensor.

RELATED ART DOCUMENTS

PATENT DOCUMENTS

Patent Document 1: JP 2007-300571A
Patent Document 2: WO 2014/041826

SUMMARY OF THE INVENTION

PROBLEMS TO BE SOLVED BY THE INVENTION

The applicant of the present invention, in order to realize a mechanism for appropriately distributing information resources such as sensing data in IoT, investigated a system that specifies a sensor capable of acquiring sensing data that satisfies the requirements of an application that uses the sensing data and controls the dataflow from the sensor to the application, by matching "sensor-side metadata" that describes information relating to the sensor with "app-side metadata" that describes information relating to the application (see Patent Document 2).

Furthermore, the applicant of the present invention focused on a technology called a "virtual sensor" as one element technology that develops and expands sensor networks (see Patent Document 2). For example, if a program module that processes sensing data obtained from an original sensor and outputs the processed data as new data is created as a virtual sensor and provided to the user of a sensor network, the user is able to use the virtual sensor indistinguishably from a real sensor. By introducing such a virtual sensor, various effects can be expected, such as promotion of the utilization of sensing data and provision of sensing data having new added value. In addition, those who are not in possession of a real sensor can also participate in distribution markets as virtual sensor operators, and it can be expected that this will lead to the development of markets.

Incidentally, in realizing dataflow control from a sensor to an application, different mechanisms are required in the case of a real sensor and the case of a virtual sensor. In the case of a real sensor, one-to-one data exchange between the "real sensor" (or sensor network adaptor, which is a device that connects the real sensor to the network) on the data provider-side and the "application" on the data user-side need only be performed, whereas, in the case of a virtual sensor, data exchange between three parties, namely, the "original sensor" that provides the original data required in generation of virtual sensing data, the "virtual sensor" and the "application", rather than between the two parties of the "virtual sensor" and the "application", is required.

It is also conceivable, for example, to employ a mechanism in which a virtual sensor actively collects required original data from a real sensor and stores the collected data. However, in the case of such a mechanism, a function for data collection will be required in the virtual sensor, and a mass database for storing the collected data will be required. Also, an excessive load for data collection/management arises in the virtual sensor, and difficulties could possibly occur in data provision from the virtual sensor to the application. Therefore, a mechanism that realizes a dataflow from a real sensor to a virtual sensor in a simple and efficient manner is desired.

Note that although a sensor network has been given as an example in the foregoing description, exactly the same issues can also arise with a network in which data that is output (provided) by a device other than a sensor is distributed. As a device other than a sensor, any device that outputs data of some kind is applicable, such as an actuator, a controller, a computer, a household electrical appliance, a wearable terminal, an automatic ticket gate, a vending machine and an ATM. In this specification, the term "device" is used as a concept that encompasses these apparatuses (including sensors), and a network that distributes data output (provided) by such a device is called a "device network". The various types of devices illustrated above can exist together and be connected in the device network.

The present invention was made in view of the above circumstances, and an object thereof is to provide a technology for realizing an efficient dataflow of data of a virtual device in a device network.

MEANS FOR SOLVING THE PROBLEMS

The invention is defined by the appended independent claims. Further preferred embodiments are described in the dependent claims. According to an aspect 1 of the disclosure there is described a dataflow control apparatus including a device-side metadata storage unit configured to store, for each of a plurality of devices, device-side metadata including at least information that indicates a specification of data that the device is capable of providing, an app-side metadata storage unit configured to store, for an application that uses data to provide a service, app-side metadata including at least information that indicates a specification of data that the application requires, a matching unit configured to extract a device capable of providing data that satisfies the specification that the application requires from among the plurality of devices, by matching the app-side metadata and the device-side metadata, and a dataflow instructing unit configured to generate and transmit a dataflow control command that instructs transmission of data, based on a result of the matching by the matching unit, and, in a case where the extracted device is a virtual device that generates new data on a basis of data obtained from one or more original devices and outputs the generated new data as virtual data, the dataflow instructing unit is configured to transmit, to the original device or an apparatus that manages the original device, a first dataflow control command instructing transmission of data from the original device to the virtual device, and transmit, to the virtual device or an apparatus that manages the virtual device, a second dataflow control command instructing transmission of virtual data from the virtual device to the application.

According to the aspect 1, in the case of a virtual device, two dataflow control commands, namely, a first dataflow control command and a second dataflow control command, are generated, with the first dataflow control command being transmitted to an original device (device that provides original data required in generation of virtual data) or an apparatus that manages the original device, and the second dataflow control command being transmitted to the virtual device or an apparatus that manages the virtual device. Due to transmission of original data from the original device to the virtual device being executed based on the first dataflow control command, and transmission of virtual data from the virtual device to the application being executed based on the second dataflow control command, data exchange between the three parties of the "original device", the "virtual device" and the "application" is performed. According to this mechanism, since original data required in generation of virtual data is sent to the virtual device automatically, the virtual device does not need to collect or store required original data itself (actively), and an excessive load for data collection/management also does not arise. Therefore, an efficient dataflow of virtual data can be realized.

The disclosure according to an aspect 2 is the dataflow control apparatus according to the aspect 1 characterized by, in a case where the extracted device is a real device, the dataflow instructing unit transmitting, to the real device or an apparatus that manages the real device, a third dataflow control command instructing transmission of data from the real device to the application.

According to the disclosure of the aspect 2, in the case of a real device, a third dataflow control command is transmitted to the real device or an apparatus that manages the real device, and transmission of data from the real device to the application is executed based on this third dataflow control command. In this way, as a result of appropriately changing the contents and transmission destination of dataflow control commands, depending on whether the device extracted through matching is a real device or a virtual device, the dataflow of both real devices and virtual devices can be realized in a simple manner.

The disclosure according to an aspect 3 is the dataflow control apparatus according to the aspect 1 or 2 characterized by the dataflow control command including time information designating a time at which data to be transmitted is to be sensed or generated or a time at which data is to be transmitted, and the dataflow instructing unit setting respective time information for the first dataflow control command and the second dataflow control command, such that sensing, generation or transmission of data based on the first dataflow control command is executed before generation or transmission of virtual data based on the second dataflow control command.

According to aspect 3, due to the original device or an apparatus that manages the original device operating in accordance with the first dataflow control command, and the virtual device or an apparatus that manages the virtual device operating in accordance with the second dataflow control command, it is assured that sensing, data generation or data transmission by the original device will be executed prior to generation or transmission of virtual data by the virtual device. That is, original data required in generation of virtual data is sensed or generated at a suitable time in the original device, and sent to the virtual device in time for generation or transmission of virtual data. Therefore, an efficient dataflow of virtual data can be realized.

The disclosure according to an aspect 5 is a dataflow control method including steps of acquiring, by a computer, for each of a plurality of devices, device-side metadata including at least information that indicates a specification of data that the device is capable of providing, from a device-side metadata storage unit configured to store the device-side metadata, acquiring, by the computer, for an application that uses data to provide a service, app-side metadata including at least information that indicates a specification of data that the application requires, from an app-side metadata storage unit configured to store the app-side metadata, extracting, by the computer, a device capable of providing data that satisfies the specification that the application requires from among the plurality of devices, by matching the app-side metadata and the device-side metadata, and generating and transmitting, by the computer, a dataflow control command that instructs transmission of data, based on a result of the matching, and, in a case where the extracted device is a virtual device that generates new data on a basis of data obtained from one or more original devices and outputs the generated new data as virtual data, the transmitting of the dataflow control command including transmitting, to the original device or an apparatus that manages the original device, a first dataflow control command instructing transmission of data from the original device to the virtual device, and transmitting, to the virtual device or an apparatus that manages the virtual device, a second dataflow control command instructing transmission of virtual data from the virtual device to the application.

According to aspect 5, in the case of a virtual device, two dataflow control commands, namely, a first dataflow control command and a second dataflow control command, are generated, with the first dataflow control command being transmitted to an original device (device that provides original data required in generation of virtual data) or an apparatus that manages the original device, and the second dataflow control command being transmitted to the virtual device or an apparatus that manages the virtual device. Due to transmission of original data from the original device to the virtual device being executed based on the first dataflow control command, and transmission of virtual data from the virtual device to the application being executed based on the second dataflow control command, data exchange between the three parties of the "original device", the "virtual device" and the "application" is performed. According to this mechanism, since original data required in generation of virtual data is sent to the virtual device automatically, the virtual device does not need to collect or store required original data itself (actively), and an excessive load for data collection/management also does not arise. Therefore, an efficient dataflow of virtual data can be realized.

The disclosure according to an aspect 6 is a program that causes a computer to execute the steps of the dataflow control method according to the aspect 5.

According to aspect 6, in the case of a virtual device, two dataflow control commands, namely, a first dataflow control command and a second dataflow control command, are generated, with the first dataflow control command being transmitted to an original device (device that provides original data required in generation of virtual data) or an apparatus that manages the original device, and the second dataflow control command being transmitted to the virtual device or an apparatus that manages the virtual device. Due to transmission of original data from the original device to the virtual device being executed based on the first dataflow control command, and transmission of virtual data from the virtual device to the application being executed based on the second dataflow control command, data exchange between the three parties of the "original device", the "virtual device" and the "application" is performed. According to this mechanism, since original data required in generation of virtual data is sent to the virtual device automatically, the virtual device does not need to collect or store required original data itself (actively), and an excessive load for data collection/management also does not arise. Therefore, an efficient dataflow of virtual data can be realized.

A "device" in the present invention means all devices that output (provide) data of some kind, examples of which include sensors, actuators, controllers, computers, household electrical appliances, wearable terminals, automatic ticket gates, vending machines and ATMs. Above all, the present invention is preferably applied to a sensor network that distributes sensing data output from a sensor.

Note that the present invention can be regarded as a dataflow control apparatus that has at least a part of the above configurations or functions. The present invention can also be regarded as a device network system that has the dataflow control apparatus. The present invention can also be regarded as a dataflow control method that includes at least a part of the above processing, a program for causing a computer to execute this method, or a computer-readable recording medium on which such a program is recorded in a non-transitory manner. The present invention can also be regarded as a control command datastream for controlling the above dataflow. The present invention can be configured by combining the various configurations and processing that are described above as long as there are no technical inconsistencies.

EFFECTS OF THE INVENTION

According to the present invention, an efficient dataflow of data of a virtual device in a device network can be realized.

BRIEF DESCRIPTION OF THE DRAWINGS

Fig. 1 is a diagram showing the overall configuration of a sensor network system.
Fig. 2A is a diagram showing an example of a sensor-side metadata management table, and
Fig. 2B is a diagram showing an example of an app-side metadata management table.
Fig. 3A is a diagram showing an example of a virtual sensor class management table, and
Fig. 3B is a diagram showing an example of a virtual sensor instance management table.
Fig. 4 is a flowchart of matching and dataflow control by a sensor network server.
Figs. 5A and 5B are diagrams showing an example of dataflow control commands in the case of a virtual sensor, and Fig. 5C is a diagram showing an example of a dataflow control command in the case of a real sensor.

EMBODIMENTS OF THE INVENTION

Hereinafter, a preferred embodiment of the present invention will be described, with reference to the drawings. Description of configurations that is given below can be appropriately changed depending on the configuration of the system and various conditions to which the invention is applied, and it is not intended to limit the scope of this invention to the following description.

The embodiment discussed below describes an example in which the present invention is applied to a sensor network system that uses M2M Cloud. By realizing this mechanism, anyone in any location becomes able to easily acquire desired information from a diverse range of information that is obtained from the large number of sensors (both real and virtual sensors can exist together) that exist in a sensor network, and it is expected that effective use of sensors (resources) and distribution of sensing data from data providers to data users will be promoted. This system can be applied and deployed to various applications, such as a traffic control system that is based on sensing data of traffic conditions, a weather forecasting system that is based on environmental sensing data, and various types of analytical systems that use big data.

Overall System Configuration

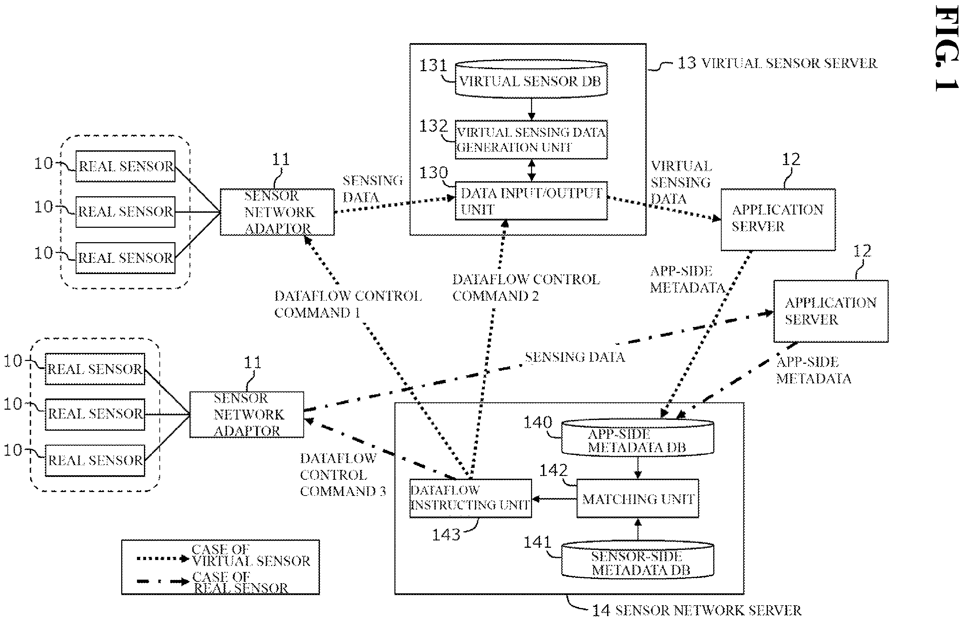

The overall configuration of a sensor network system according to the embodiment of the present invention will be described, with reference to Fig. 1. This sensor network system is a system for controlling the distribution of sensing data from data providers to data users, and has, in summary, a plurality of real sensors 10, a sensor network adaptor 11 which is an apparatus that manages the real sensors 10, a plurality of application servers 12 having applications that use sensing data to provide services, a virtual sensor server 13 which is an apparatus that manages virtual sensors, and a sensor network server 14 serving as dataflow control apparatus that administers mediation between providers and users of sensing data.

The apparatuses are communicably connected by a wide area network such as the Internet or by a LAN. Note that the network is not limited to a single network, and may be conceived as a conceptual entity in which a plurality of networks having various communication methods and topologies are interconnected. In short, any form of network capable of realizing transmission and reception of sensing data and transmission and reception of data such as metadata and dataflow control commands related to distribution of sensing data may be used.

Real Sensors

The real sensors 10 are devices that detect the physical quantity of a sensing object and changes therein, and outputs detected data as sensing data. In this specification, in order to distinguish from a virtual sensor, a sensor having physical substance is called a "real sensor" (may also be simply described as a "sensor" when it is not necessary to distinguish between virtual and real sensors). The real sensors 10 are, for example, sensors such as image sensors (surveillance cameras, etc.), temperature sensors, humidity sensors, illuminance sensors, force sensors, sound sensors, RFID sensors, infrared sensors, attitude sensors, rainfall sensors, radioactivity sensors, gas sensors, acceleration sensors, gyroscopes and GPS sensors. Also, since devices such as mobile phones, smartphones, tablet terminals, mobile PCs and drones are equipped with various types of sensors, these devices can also be regarded as real sensors. In the sensor network system of the present embodiment, any type of sensor can be connected, including the sensors illustrated here. Also, large numbers of sensors are already installed for various applications and purposes in all kinds of locations throughout world, such as for FA and production management of factories, urban transport control, environmental measurement of weather and the like, healthcare and crime prevention, and it is also possible to connect these sensors to the present system. Note that the sensor network system may be constituted by only one type of sensor, or may be constituted by a plurality of types of sensors.

Sensor Network Adaptor

The sensor network adaptor 11 is an apparatus that is communicably connected to one or a plurality of real sensors 10 in a wireless or wired manner, and performs processing such as management of the real sensors 10, acquisition of sensing data from the real sensors 10, and transmission of sensing data to the sensor network system and applications. The sensor network adaptor 11 may also have a function of performing predetermined processing on sensing data (signal processing such as noise reduction, computational processing such as averaging, sampling, data compression, time stamping, etc.). The sensor network adaptor 11 has a function of communicating with external apparatuses, and is able to communicate with the virtual sensor server 13, the application servers 12, the sensor network server 14 and the like via a network.

Devices such as smartphones, tablet terminals, mobile PCs, drones and wearable terminals incorporate sensors such as image sensors, GPS sensors, acceleration sensors and microphones, and have a function of processing and outputting data obtained by the sensors and a network communication function. Accordingly, these devices are examples of devices in which the real sensors 10 and the sensor network adaptor 11 are physically integrated. Note that, in Fig. 1, only a configuration in which the real sensors 10 are connected to the sensor network system via the sensor network adaptor 11 is shown, but in the case where the real sensors 10 incorporate a communication function, the real sensors 10 are connectable to the sensor network system in a standalone manner (i.e., not via the sensor network adaptor 11).

Virtual Sensor Server

The virtual sensor server 13 is an apparatus that manages virtual sensors that are currently being executed, and is constituted by an M2M cloud server. The virtual sensor server 13 can, in terms of hardware, be constituted by a general-purpose computer that is provided with a CPU (processor), a memory, an auxiliary storage device (HDD, etc.), a communication device, an input device, a display device and the like. The virtual sensor server 13 has, as main functions, a data input/output unit 130, a virtual sensor DB 131, a virtual sensing data generation unit 132 and the like. These functions are realized by the CPU executing required programs.

The data input/output unit 130 is a function that transmits data to and receives data from external apparatuses. The data input/output unit 130 enables, for example, reception of sensing data from the real sensors 10 or the sensor network adaptor 11, reception of dataflow control commands from the sensor network server 14 which will be discussed later, transmission of virtual sensing data to an application, and the like, through the Internet. The virtual sensor DB 131 is a database in which information of virtual sensors that are currently being executed is registered. The virtual sensing data generation unit 132 is a function that generates new data (called virtual sensing data) on the basis of the input sensing data obtained from the real sensors 10.

Virtual Sensors

Virtual sensors are functional modules that generate new data by processing or analyzing input sensing data that is obtained from one or more original sensors, and output the generated new data as virtual sensing data. Conceptually, virtual sensors are constituted by a combination of one or more sensors (sensors from which input sensing data is acquired) and a virtual sensor function which is a program that performs processing, analysis and the like of input sensing data, and are distinguished from the real sensors 10 by not being a physical device. The sensor network system of the present embodiment is characterized by enabling use of virtual sensors and distribution of sensing data that is generated/output by virtual sensors, in addition to the real sensors 10.

For example, assume that the information that a certain application server 12 needs is "the speed of vehicles passing along a road AB." If a speed sensor installed on the road AB exists among the real sensors 10 connected to the sensor network, sensing data obtained with this speed sensor need only be provided to the application server 12. However, it can be the case that a real sensor that perfectly matches the requirements of the application server 12 does not exist. In such a case, if there are cameras respectively installed at an intersection A on the entrance-side and an intersection B on the exit-side of the road AB, the time taken for a car to move from the intersection A to the intersection B and the distance between the intersections A and B can be calculated on the basis of image data and time information respectively obtained from the entrance-side camera and the exit-side camera and the position information of each camera, and the speed of the car can be estimated from the calculation results. That is, a virtual sensor that realizes a function equivalent to a vehicle speed sensor can be created, using the cameras respectively installed at the intersections A and B and a virtual sensor function. Note that it is possible to create various types of virtual sensors other than that illustrated here. That is, any module that provides a function of generating, from one or more sets of input sensing data, data having a different value (new value) to such original input sensing data and outputting the generated data can be called a virtual sensor, and various virtual sensors can be constructed contingent on the idea.

As evident from the above example, by enabling use of virtual sensors in the present system, various effects can be expected, such as improvement in the utilization rate of resources (real sensors) of sensor networks and provision of sensing data having new value.

Application Servers

The application servers 12 are server devices in which various applications that use sensing data to provide services are installed. The application servers 12 can also be constituted by a general-purpose computer that is provided with a CPU (processor), a memory, an auxiliary storage device (HDD, etc.), a communication device, an input device, a display device and the like. The application servers 12 are installed by users of sensing data, and various applications are envisaged according to the application/purpose thereof.

As an example of an application, an application that collects traffic conditions at various spots from sensors installed on roads or from in-vehicle terminals mounted in vehicles that travel along the road or the smartphones of drivers to generate a traffic congestion map, and provides the generated traffic congestion map to a business operator or the like that uses traffic congestion information is conceivable. Additionally, applications such as a video delivery application that collects image data captured during travel with smartphones, in-vehicle cameras and the like and provides the collected image data to users who wants to know the situation at various spots, a route search application that searches for travel routes for vehicles on the basis of traffic congestion information and the like, and an application that estimates statistical data of attributes (sex, age group, etc.) of passersby from video of cameras installed in specific places and provides the estimated statistical data as data for various studies are conceivable.

Sensor Network Server

The sensor network server 14 is a server device that administers processing such as matching of providers and users of sensing data and dataflow control of sensing data from providers to users, and is a specific example of a dataflow control apparatus according to the present invention. The sensor network server 14 can also be constituted by a general-purpose computer that is provided with a CPU (processor), a memory, an auxiliary storage device (HDD, etc.), a communication device, an input device, a display device and the like. The various functions of the sensor network server 14 which will be discussed later are realized by the CPU executing required programs.

The sensor network system is a system that networks a large number (or various types) of sensors, and enables collection and use of sensing data, and, in the present embodiment, can be regarded as a mechanism in which data providers (real sensors, virtual sensors) provide sensing data to data users (application servers) and obtain compensation. Thereby, the advantage for data providers is the opportunity for profit, and the advantage for users is cheap data acquisition. The sensor network server 14 is a server device that mediates such transactions of sensing data, and is configured to match data providers and data users and realize appropriate distribution of sensing data.

Incidentally, it is not realistic to extract data matching the desired conditions of data users from a huge amount of sensing data, when matching data providers and data users. In view of this, in the present system, sensor-side metadata describing specifications, provision conditions and the like of sensing data is prepared for all sensors (including real and virtual sensors) registered in the sensor network, and app-side metadata describing requirement specifications, utilization conditions and the like of sensing data is also used for applications which are data users. Appropriate matching of data providers (sensors) and users (applications) is then performed through comparison of respective metadata.

In the exemplary system configuration of Fig. 1, the sensor network server 14 has an app-side metadata DB 140, a sensor-side metadata DB 141, a matching unit 142, and a dataflow instructing unit 143. The app-side metadata DB 140 is a storage unit that stores app-side metadata received from the application servers 12. The sensor-side metadata DB 141 is a storage unit that stores sensor-side metadata for all of the sensors that are registered in the sensor network. The matching unit 142 is a function that matches app-side metadata and sensor-side metadata, and extracts sensors capable of providing sensing data that satisfies the requirements of an application. The dataflow instructing unit 143 is a function that generates dataflow control commands that instruct transmission of sensing data, based on the matching result of the matching unit 142, and transmits the generated dataflow control commands. These functions will be discussed in detail later.

Sensor-side Metadata

Sensor-side metadata is metadata describing information such as attribute information of a sensor, information indicating the specifications of sensing data that the sensor is capable of providing, and information indicating the provision conditions of the sensing data. The attribute information of a sensor desirably includes an ID specifying the sensor, information (called the sensor class) showing whether the sensor is a real sensor or a virtual sensor, the type of sensor, a network address of the sensor, and an operation history of the sensor, for example. An IP address, a MAC Address or a URI (Uniform Resource Identifier), for example, can be used for the network address. In the case where a sensor is connected to the network via the sensor network adaptor 11, the network address of the sensor network adaptor 11 need only be set, and, in the case of a virtual sensor, the network address of the virtual sensor server 13 need only be set. The information indicating the specifications of sensing data desirably includes the sensing object (i.e., what is being sensed), the area in which sensing is performed (e.g., position, range, etc.), the sensing time (time of day or time slot that sensing data is acquirable), the data type of the sensing data (e.g., image, moving image, temperature, etc.), the data format (e.g., JPEG, text, etc.), sensing conditions (e.g., shutter speed, resolution, sampling period, etc.) and data reliability, for example. The information indicating the provision conditions of sensing data is information indicating the transaction conditions sought by a data provider, and desirably includes an ID specifying the data provider, compensation (provision price of data), and the range/purpose of use (e.g., unavailable for commercial use, available for secondary use, etc.), for example.

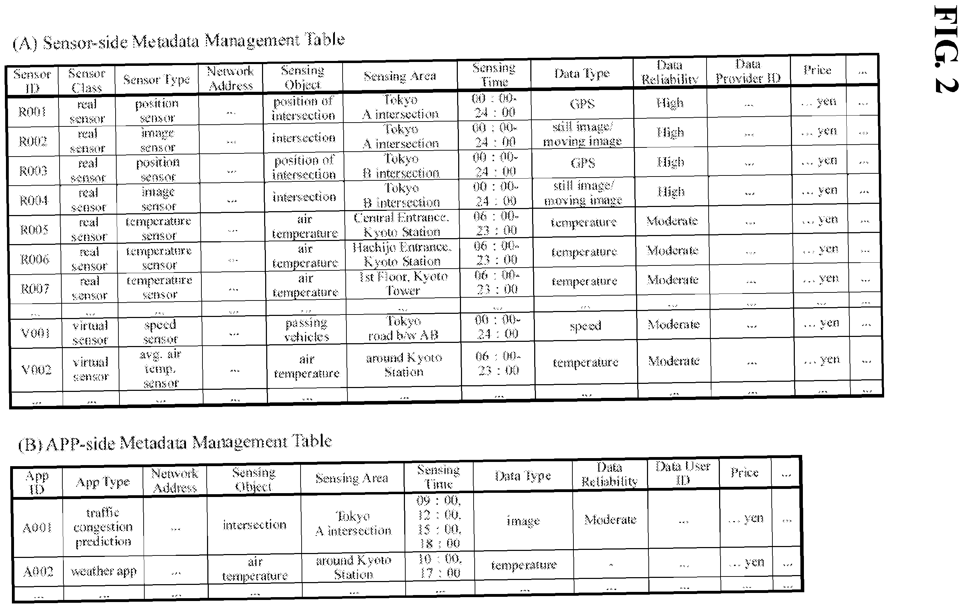

Fig. 2A shows an example of a sensor-side metadata management table that is stored in the sensor-side metadata DB 141. In the example of Fig. 2A, the sensor-side metadata of real sensors R001 to R007 and virtual sensors V001 and V002 is shown.

App-side Metadata

App-side metadata is metadata describing attribute information of an application, information indicating the specifications (requirement specifications) of sensing data that the application requires, information indicating the utilization conditions of the sensing data, and the like. The attribute information of an application desirably includes an ID specifying the application, the type of application and a network address of the application, for example. An IP address, a port number or the like, for example, can be used for the network address. The information indicating the requirement specifications of sensing data desirably includes the sensing object, the area in which sensing is performed, the sensing time, the data type of sensing data, the data format, sensing conditions and data reliability, for example. The information indicating utilization conditions is information indicating transaction conditions sought by a data user, and desirably includes an ID specifying the data user, compensation (upper limit for utilization price of data) and the range/purpose of use, for example. Note that items with respect to which there is no particular specification of conditions need only be left blank (not specified).

Fig. 2B shows an example of an app-side metadata management table (also called a cue table) that is stored in the app-side metadata DB 140. In the example of Fig. 2B, app-side metadata respectively received from two applications A001 and A002 is shown.

Example of Virtual Sensor

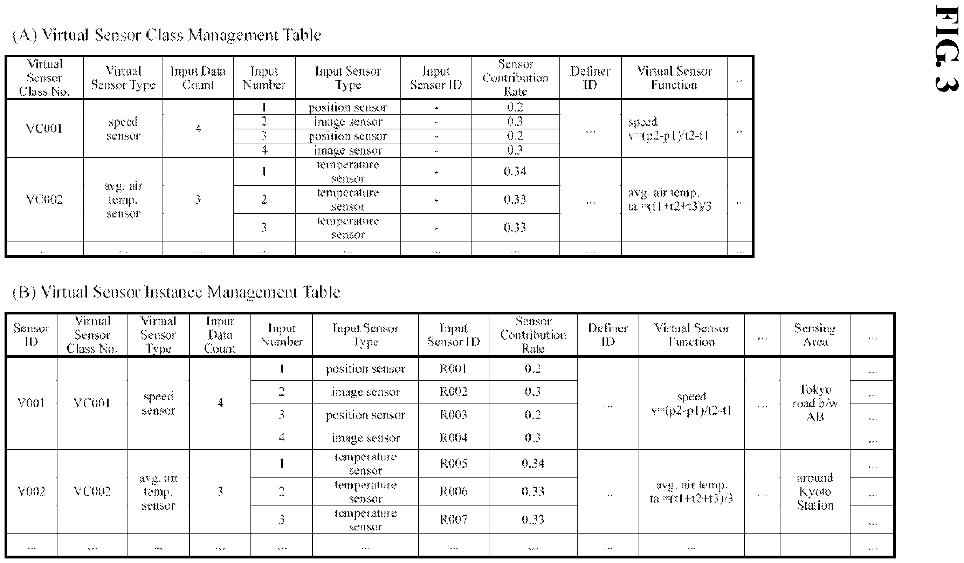

Fig. 3A is an example of a virtual sensor class management table in which definitions of virtual sensor classes are registered. A virtual sensor class is a template (model) for a virtual sensor, and represents an abstracted virtual sensor with respect to which a real sensor that acquires input sensing data has not been specified. The virtual sensor class desirably includes a virtual sensor class number, the type of virtual sensor, the number of input sensing data, the type of each sensor from which input sensing data is acquired, the contribution rate of each sensor, information specifying the definer of the virtual sensor class and a virtual sensor function, for example. The virtual sensor function is the definition of the procedure for deriving virtual sensing data from input sensing data, and may be given in any form such as a function, an arithmetic equation, a lookup table or a program module.

A virtual sensor class VC001 shown in Fig. 3A is a template defining a speed sensor that derives the speed of a vehicle using the following equation, based on four sets of input sensing data that are obtained from two position sensors and two image sensors.

$$\text{Speed } v = (p2 - p1)/(t2 - t1)$$

Note that p1 and p2 are respective position coordinates of the sensing areas of the image sensors that are derived based on the sensing data of the position sensors, and t1 and t2 are the respective times at which the same vehicle is detected by the image sensors.

Also, a virtual sensor class VC002 shown in Fig. 3A is a template defining an average air temperature sensor that derives an average air temperature using the following equation, based on three sets of input sensing data that are obtained from three temperature sensors.

$$\text{Average air temperature } t_a = (t1 + t2 + t3)/3$$

Note that t1 to t3 are the respective temperatures sensed with the three temperature sensors.

Fig. 3B is an example of a virtual sensor instance management table in which virtual sensors (instances) generated from virtual sensor classes are registered. The virtual sensor V001 shown in Fig. 3B is a virtual sensor generated on the basis of the virtual sensor class VC001, and is an example of a virtual speed sensor that calculates the speed of vehicles on the road between the intersections A and B, based on input sensing data that is obtained from the four real sensors R001, R002, R003 and R004, and outputs the calculated speed as virtual sensing data. Also, the virtual sensor V002 shown in Fig. 3B is a virtual sensor generated on the basis of the virtual sensor class VC002, and is an example of a virtual average air temperature sensor that calculates the average air temperature around Kyoto Station, based on input sensing data obtained from the three real sensors R005, R006 and R007, and outputs the calculated average air temperature as virtual sensing data.

The tables shown in Figs. 3A and 3B are stored in the sensor-side metadata DB 141 of the sensor network server 14, and are referred to when the dataflow instructing unit 143 generates dataflow control commands. These tables are also stored in the virtual sensor DB 131 of the virtual sensor server 13, and are referred to when the virtual sensing data generation unit 132 generates virtual sensing data from input sensing data.

Matching and Dataflow Control

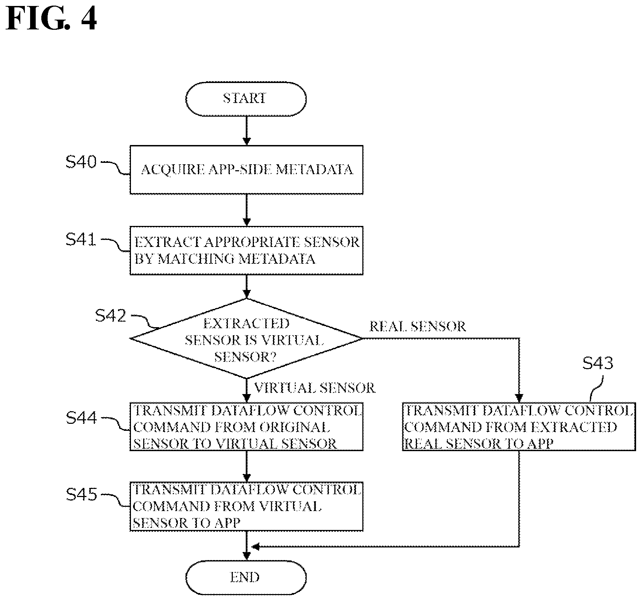

Next, matching and dataflow control processing will be described using Figs. 1 and 4. Here, exemplary processing in which the sensor network server 14 matches app-side metadata and sensor-side metadata and issues a dataflow control command for sensing data from an appropriate sensor to an application, triggered by the sensor network server 14 receiving app-side metadata transmitted from the application server 12, will be described.

The application server 12 transmits a sensing data request together with app-side metadata, using a predetermined API (Application Programming Interface) of the sensor network server 14. The sensor network server 14, upon receiving the sensing data request, records the app-side metadata included in the request to the app-side metadata management table (see Fig. 2B) of the app-side metadata DB 140. The matching unit 142 then acquires pending app-side metadata from the app-side metadata management table one at a time (step S40).

The matching unit 142 compares the acquired app-side metadata with the sensor-side metadata of each sensor registered in the sensor-side metadata management table (see Fig. 2A) within the sensor-side metadata DB 141, and determines whether the specifications and provision conditions of the sensing data defined by sensor-side metadata satisfy the requirement specifications and utilization conditions of the sensing data defined by the app-side metadata (step S41). When a sensor that provides sensing data that satisfies the requirement specifications and utilization conditions can be extracted, the matching unit 142 notifies information of the extracted sensor to the dataflow instructing unit 143. Note that, in the case where a sensor that provides sensing data satisfying the requirement specifications and utilization conditions is not found, the processing may be ended, or sensing data that most closely approximates the requirement specifications and utilization conditions may be recommended to the data user.

The dataflow instructing unit 143 judges whether the sensor extracted in step S41 is a virtual sensor or a real sensor (step S42). This judgment need only involve checking the sensor class of the sensor-side metadata, for example (see Fig. 2A).

(1) Case where extracted sensor is real sensor

The dataflow instructing unit 143 generates a dataflow control command 3 that instructs transmission of sensing data from the real sensor to an application, and transmits this dataflow control command 3 to the real sensor 10 or the sensor network adaptor 11 that manages this real sensor 10 (step S43). Then, as shown by the one-dotted chain line arrow in Fig. 1, the sensor network adaptor 11, based on the dataflow control command 3, acquires required sensing data from the real sensor 10, and transmits the acquired sensing data to the application server 12.

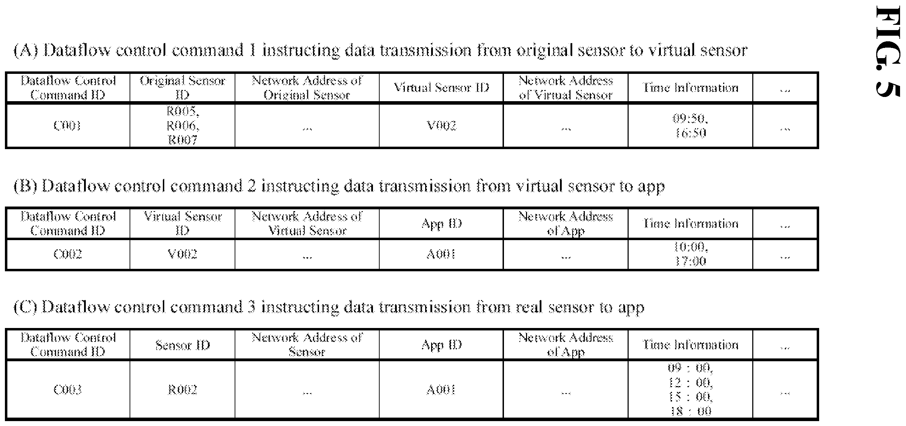

Fig. 5C shows an example of the dataflow control command in this case. The dataflow control command desirably includes a dataflow control command ID, information specifying the real sensor (sensor ID, network address of real sensor), information specifying the app (app ID, network address of app), time information and the like. For example, in the case where app-side metadata (see Fig. 2B) is received from the app A001, the real sensor R002 (see Fig. 2A) is extracted through matching. Accordingly, as shown in Fig. 5C, the sensor ID (R002) and the network address thereof are set as information specifying the real sensor, the app ID (A001) and the network address thereof are set as information specifying the app, and the sensing time required by the app is set as time information. In this example, image data of an A intersection in Tokyo will be transmitted from the sensor R002 to the app A001 at the four times 9:00, 12:00, 15:00 and 18:00.

(2) Case where extracted sensor is virtual sensor

In the case of a virtual sensor, two dataflows, namely, transmission of sensing data from an original sensor to the virtual sensor and transmission of virtual sensing data from the virtual sensor to an application, are required. In view of this, in the present embodiment, the dataflow instructing unit 143 generates two dataflow control commands, and respectively transmits the dataflow control commands to the required devices.

Specifically, the dataflow instructing unit 143 generates a dataflow control command 1 that instructs transmission of sensing data from an original sensor to a virtual sensor, with reference to the sensor-side metadata management table (Fig. 2A), the app-side metadata management table (Fig. 2B) and the virtual sensor instance management table (Fig. 3B), and transmits this dataflow control command to the original sensor or the sensor network adaptor 11 that manages this original sensor (step S44). Furthermore, the dataflow instructing unit 143 generates a dataflow control command 2 that instructs transmission of virtual sensing data from the virtual sensor to an application, and transmits this dataflow control command to the virtual sensor server 13 (step S45).

Then, as shown by the dashed line arrow in Fig. 1, the sensor network adaptor 11, based on the dataflow control command 1, acquires required sensing data from a real sensor 10, and transmits the acquired sensing data to the virtual sensor server 13. In the virtual sensor server 13, the data input/output unit 130 receives the sensing data, and the virtual sensing data generation unit 132 generates virtual sensing data, using the received sensing data and a virtual sensor function acquired from the virtual sensor DB 131. The data input/output unit 130 then transmits the virtual sensing data to an application server 12, based on the dataflow control command 2. Virtual sensing data is thereby provided.

Figs. 5A and 5B show an example of the dataflow control command 1 from an original sensor to a virtual sensor and the dataflow control command 2 from the virtual sensor to an application. For example, in the case where app-side metadata (see Fig. 2B) is received from the application A002, the virtual sensor V002 (see Fig. 2A) is extracted through matching. Accordingly, in the dataflow control command 1, as shown in Fig. 5A, sensor IDs (R005, R006, R007) and the network addresses thereof are set as information specifying the original sensors, a virtual sensor ID (V002) and the network address thereof are set as information specifying the virtual sensor, and time information that is based on the sensing time required by the application is set as the time information. Also, in the dataflow control command 2, as shown in Fig. 5B, a virtual sensor ID (V002) and the network address of the virtual sensor server 13 are set as information specifying the virtual sensor, an app ID (A002) and the network address of the application server 12 are set as information specifying the application, and the sensing time required by the application is set as the time information.

Here, the dataflow instructing unit 143 desirably sets the respective time information of the dataflow control command 1 and the dataflow control command 2, such that sensing or transmission of sensing data based on the dataflow control command 1 is executed before generation or transmission of virtual sensing data based on the dataflow control command 2. For example, the dataflow instructing unit 143 calculates a margin based on the delay of data transmission from the original sensor to the virtual sensor and the time required to generate virtual sensing data in the virtual sensor server 13, and sets the time information of the dataflow control command 1 to a time that is earlier than the time information of the dataflow control command 2 by at least the margin. It is thereby assured that sensing or data transmission by the original sensor will be executed before generation or transmission of virtual sensing data by the virtual sensor. That is, sensing data (original data) required in generation of virtual sensing data is sensed at a suitable time in the original sensor, and is sent to the virtual sensor in time for generation or transmission of virtual sensing data.

According to the configuration of the present embodiment described above, data exchange between three parties consisting of an original sensor, a virtual sensor and an application is performed, due to transmission of sensing data (original data) from an original sensor to a virtual sensor being executed based on the dataflow control command 1, and transmission of virtual sensing data from the virtual sensor to an application being executed based on the dataflow control command 2. According to this mechanism, since original data required in generation of virtual sensing data is automatically sent to the virtual sensor, the virtual sensor does not need to collect or store required original data itself (actively), and excessive load for data collection and management does not arise. Therefore, an efficient dataflow of virtual sensing data can be realized.

On the other hand, in the case of a real sensor, transmission of sensing data from the real sensor to an application is executed based on the dataflow control command 3. In this way, as a result of the contents and transmission destination of dataflow control commands being appropriately changed, depending on whether the sensor extracted through matching is a real sensor or a virtual sensor, the dataflow of both real and virtual sensors can be realized in a simple manner.

Note that the configuration of the embodiment described above is merely a specific example of the present invention, and is not intended to limit the scope of the invention. The present invention can take various specific configurations that do not depart from the technical concept of the invention. For example, the data structure and table structure shown in the above embodiment are examples, and items may be appropriately added or replaced. Also, although, in the above embodiment, distribution of sensing data in a sensor network was illustrated, the present invention is also applicable to distribution of data in a device network that includes devices other than sensors. In that case, the basic configuration of the system will be similar to that of the above embodiment, and "device" need only be read for "sensor" and "data" need only be read for "sensing data" in the above embodiment.

INDEX TO THE REFERENCE NUMERALS

10: Real sensor
11: Sensor network adaptor
12: Application server
13: Virtual sensor server
14: Sensor network server
130: Data input/output unit
131: Virtual sensor DB
132: Virtual sensing data generation unit
140: App-side metadata DB
141: Sensor-side metadata DB
142: Matching unit
143: Dataflow instructing unit

**Claims**

1. A dataflow control apparatus (14) comprising:

    a device-side metadata storage unit (141) configured to store, for each of a plurality of devices, device-side metadata including at least information that indicates a specification of data that the device is capable of providing;
    an app-side metadata storage unit (140) configured to store, for an application that uses data to provide a service, app-side metadata including at least information that indicates a specification of data that the application requires;
    a matching unit (142) configured to extract a device capable of providing data that satisfies the specification that the application requires from among the plurality of devices, by matching the app-side metadata and the device-side metadata; and
    a dataflow instructing unit (143) configured to generate and transmit a dataflow control command that instructs transmission of data, based on a result of the matching by the matching unit (142),
    wherein the dataflow instructing unit (143) is configured to determine whether the extracted device is a virtual device configured to generate new data on a basis of data obtained from one or more original devices and output the generated new data as virtual data, or a real device (10), and in a case where the extracted device is a virtual device

    transmit, to the original device or an apparatus that manages the original device, a first dataflow control command instructing transmission of data from the original device to the virtual device; and
    transmit, to the virtual device or an apparatus (13) that manages the virtual device, a second dataflow control command instructing transmission of virtual data from the virtual device to the application.

2. The dataflow control apparatus (14) according to claim 1,
    wherein, in a case where the extracted device is a real device (10), the dataflow instructing unit (143) is configured to transmit, to the real device or an apparatus (11) that manages the real device, a third dataflow control command instructing transmission of data from the real device to the application.

3. The dataflow control apparatus (14) according to claim 1 or 2,
    wherein the dataflow control command includes time information designating a time at which data to be transmitted is to be sensed or generated or a time at which data is to be transmitted, and
    the dataflow instructing unit (143) is configured to set respective time information for the first dataflow control command and the second dataflow control command, such that sensing, generation or transmission of data based on the first dataflow control command is executed before generation or transmission of virtual data based on the second dataflow control command.

4. The dataflow control apparatus (14) according to any one of claims 1 to 3,
    wherein the device is a sensor that outputs sensing data.

5. A dataflow control method comprising steps of:

    acquiring, by a computer (14), for each of a plurality of devices, device-side metadata including at least information that indicates a specification of data that the device is capable of providing, from a device-side metadata storage unit (141) configured to store the device-side metadata;
    acquiring, by the computer, for an application that uses data to provide a service, app-side metadata including at least information that indicates a specification of data that the application requires, from an app-side metadata storage unit (140) configured to store the app-side metadata;
    extracting, by the computer, a device capable of providing data that satisfies the specification that the application requires from among the plurality of devices, by matching the app-side metadata and the device-side metadata;

determining whether the extracted device is a virtual device configured to generate new data on a basis of data obtained from one or more original devices and output the generated new data as virtual data, or a real device; and

generating and transmitting, by the computer, a dataflow control command that instructs transmission of data, based on a result of the matching,

wherein, in a case where the extracted device is a virtual device, the transmitting of the dataflow control command includes,

transmitting, to the original device or an apparatus that manages the original device, a first dataflow control command instructing transmission of data from the original device to the virtual device; and

transmitting, to the virtual device or an apparatus (13) that manages the virtual device, a second dataflow control command instructing transmission of virtual data from the virtual device to the application.

6. A computer program comprising instructions which, when the program is executed by a computer, cause the computer (14) to execute the steps of the dataflow control method according to claim 5.

**Patentansprüche**

1. Datenflusssteuereinrichtung (14), umfassend:

eine vorrichtungsseitige Metadatenspeichereinheit (141), die dazu konfiguriert ist, für jede einer Vielzahl von Vorrichtungen vorrichtungsseitige Metadaten zu speichern, die zumindest eine Information einschließen, die eine Spezifikation von Daten anzeigt, die die Vorrichtung bereitstellen kann;

eine App-seitige Metadatenspeichereinheit (140), die dazu konfiguriert ist, für eine Anwendung, die Daten benutzt, um einen Dienst bereitzustellen, App-seitige Metadaten zu speichern, die zumindest eine Information einschließen, die eine Spezifikation von Daten anzeigt, die die Anwendung benötigt;

eine Abgleicheinheit (142), die dazu konfiguriert ist, durch Abgleichen der App-seitigen Metadaten und der vorrichtungsseitigen Metadaten aus der Vielzahl von Vorrichtungen eine Vorrichtung zu extrahieren, die Daten bereitstellen kann, die die Spezifikation, die die Anwendung benötigt, erfüllen; und

eine Datenflussanweisungseinheit (143), die dazu konfiguriert ist, einen Datenflusssteuerbefehl, der eine Übertragung von Daten anweist, basierend auf einem Ergebnis des Abgleichens durch die Abgleicheinheit (142) zu generieren und zu übertragen,

wobei die Datenflussanweisungseinheit (143) dazu konfiguriert ist, zu bestimmen, ob die extrahierte Vorrichtung eine virtuelle Vorrichtung ist, die dazu konfiguriert ist, neue Daten auf einer Basis von Daten, die von einer oder mehreren Originalvorrichtungen erhalten wurden, zu generieren und die generierten neuen Daten als virtuelle Daten auszugeben, oder eine reale Vorrichtung (10) ist, und in einem Fall, in dem die extrahierte Vorrichtung eine virtuelle Vorrichtung ist,

an die Originalvorrichtung oder eine Einrichtung, die die Originalvorrichtung verwaltet, einen ersten Datenflusssteuerbefehl zu übertragen, der eine Übertragung von Daten von der Originalvorrichtung zu der virtuellen Vorrichtung anweist; und

an die virtuelle Vorrichtung oder eine Einrichtung (13), die die virtuelle Vorrichtung verwaltet, einen zweiten Datenflusssteuerbefehl zu übertragen, der eine Übertragung von virtuellen Daten von der virtuellen Vorrichtung zu der Anwendung anweist.

2. Datenflusssteuereinrichtung (14) nach Anspruch 1, wobei, in einem Fall, in dem die extrahierte Vorrichtung ein reale Vorrichtung (10) ist, die Datenflussanweisungseinheit (143) dazu konfiguriert ist, an die reale Vorrichtung oder eine Einrichtung (11), die die reale Vorrichtung verwaltet, einen dritten Datenflusssteuerbefehl zu übertragen, der eine Übertragung von Daten von der realen Vorrichtung zu der Anwendung anweist.

3. Datenflusssteuereinrichtung (14) nach Anspruch 1 oder 2,
wobei der Datenflusssteuerbefehl eine Zeitinformation einschließt, die eine Zeit, zu der zu übertragende Daten abgetastet oder generiert werden sollen, oder eine Zeit, zu der Daten übertragen werden sollen, bezeichnet, und

die Datenflussanweisungseinheit (143), dazu konfiguriert ist, eine entsprechende Zeitinformation für den ersten Datenflusssteuerbefehl und den zweiten Datenflusssteuerbefehl derart festzulegen, dass eine Abtastung, Generierung oder Übertragung von auf dem ersten Datenflusssteuerbefehl basierenden Daten vor einer Generierung oder Übertragung von auf dem zweiten Datenflusssteuerbefehl basierenden virtuellen Daten ausgeführt wird.

4. Datenflusssteuereinrichtung (14) nach einem der Ansprüche 1 bis 3,
wobei die Vorrichtung ein Sensor ist, der Abtastungsdaten ausgibt.

5. Datenflusssteuerverfahren, das folgende Schritte umfasst:

Erfassen, durch einen Computer (14), für jede einer Vielzahl von Vorrichtung, von vorrichtungsseitigen Metadaten, die zumindest eine Information einschließen, die eine Spezifikation von Daten anzeigt, die die Vorrichtung bereitstellen kann, aus einer vorrichtungsseitigen Metadatenspeichereinheit (141), die dazu konfiguriert ist, die vorrichtungsseitigen Metadaten zu speichern;

Erfassen, durch den Computer, für eine Anwendung, die Daten benutzt, um einen Dienst bereitzustellen, von App-seitigen Metadaten, die zumindest eine Information einschließen, die eine Spezifikation von Daten anzeigt, die die Anwendung benötigt, aus einer App-seitigen Metadatenspeichereinheit (140), die dazu konfiguriert ist, die App-seitigen Metadaten zu speichern;

Extrahieren, durch den Computer, einer Vorrichtung, die Daten bereitstellen kann, die die Spezifikation, die die Anwendung benötigt, erfüllen, aus der Vielzahl von Vorrichtungen, durch Abgleichen der App-seitigen Metadaten und der vorrichtungsseitigen Metadaten;

Bestimmen, ob die extrahierte Vorrichtung eine virtuelle Vorrichtung ist, die dazu konfiguriert ist, neue Daten auf einer Basis von Daten, die von einer oder mehreren Originalvorrichtungen erhalten wurden, zu generieren und die generierten neuen Daten als virtuelle Daten auszugeben, oder eine reale Vorrichtung ist; und

Generieren und Übertragen, durch den Computer, eines Datenflusssteuerbefehls, der eine Übertragung von Daten anweist, basierend auf einem Ergebnis des Abgleichs,

wobei, in einem Fall, in dem die extrahierte Vorrichtung eine virtuelle Vorrichtung ist, das Übertragen des Datenflusssteuerbefehls Folgendes einschließt:

Übertragen, an die Originalvorrichtung oder eine Einrichtung, die die Originalvorrichtung verwaltet, eines ersten Datenflusssteuerbefehls, der eine Übertragung von Daten von der Originalvorrichtung zu der virtuellen Vorrichtung anweist; und

Übertragen, an die virtuelle Vorrichtung oder eine Einrichtung (13), die die virtuelle Vorrichtung verwaltet, eines zweiten Datenflusssteuerbefehls, der eine Übertragung von virtuellen Daten von der virtuellen Vorrichtung zu der Anwendung anweist.

6. Computerprogramm, das Anweisungen umfasst, die, wenn das Programm von einem Computer ausgeführt wird, bewirken, dass der Computer (14) die Schritte des Datenflusssteuerverfahrens nach Anspruch 5 ausführt.

## Revendications

1. Appareil de régulation de flux de données (14) comprenant :

une unité de mémorisation de métadonnées côté dispositif (141) configurée pour mémoriser, pour chacun d'une pluralité de dispositifs, des métadonnées côté dispositif incluant au moins des informations qui indiquent une spécification de données que le dispositif est capable de fournir ;

une unité de mémorisation de métadonnées côté application (140) configurée pour mémoriser, pour une application qui utilise des données pour fournir un service, des métadonnées côté application incluant au moins des informations qui indiquent une spécification de données que l'application exige ;

une unité de mise en concordance (142) configurée pour extraire un dispositif capable de fournir des données qui satisfont à la spécification que l'application exige parmi la pluralité de dispositifs, par la mise en concordance des métadonnées côté application et des métadonnées côté dispositif ; et

une unité d'instruction de flux de données (143) configurée pour générer et transmettre une commande de régulation de flux de données qui instruit une transmission de données, sur la base d'un résultat de la mise en concordance par l'unité de mise en concordance (142),

dans lequel l'unité d'instruction de flux de données (143) est configurée pour

déterminer si le dispositif extrait est un dispositif virtuel configuré pour générer de nouvelles données sur une base de données obtenues auprès d'un ou plusieurs dispositifs initiaux et délivrer les nouvelles données générées en tant que données virtuelles, ou un dispositif réel (10), et dans un cas où le dispositif extrait est un dispositif virtuel,

transmettre, à destination du dispositif initial ou d'un appareil qui gère le dispositif initial, une première commande de régulation de flux de données instruisant une transmission de données depuis le dispositif initial au dispositif virtuel ; et

transmettre, à destination du dispositif virtuel ou d'un appareil (13) qui gère le dispositif virtuel, une deuxième commande de régulation de flux de données instruisant une transmission de données virtuelles depuis le dispositif virtuel à l'application.

2. Appareil de régulation de flux de données (14) selon la revendication 1,
dans lequel, dans un cas où le dispositif extrait est un dispositif réel (10), l'unité d'instruction de flux de données (143) est configurée pour transmettre, à destination du dispositif réel ou d'un appareil (11) qui gère le dispositif réel, une troisième commande de régulation de flux de données instruisant une transmission de données depuis le dispositif réel à l'application.

3. Appareil de régulation de flux de données (14) selon la revendication 1 ou 2,
dans lequel la commande de régulation de flux de données inclut des informations temporelles désignant un temps auquel des données à transmettre doivent être détectées ou générées ou un temps auquel des données doivent être transmises, et l'unité d'instruction de flux de données (143) est configurée pour régler des informations temporelles respectives pour la première commande de régulation de flux de données et la deuxième commande de régulation de flux de données, de sorte qu'une détection, une génération ou une transmission de données sur la base de la première commande de régulation de flux de données soit exécutée avant une génération ou une transmission de données virtuelles sur la base de la deuxième commande de régulation de flux de données.

4. Appareil de régulation de flux de données (14) selon l'une quelconque des revendications 1 à 3,
dans lequel le dispositif est un capteur qui délivre des données de détection.

5. Procédé de régulation de flux de données comprenant les étapes de :

l'acquisition, par un ordinateur (14), pour chacun d'une pluralité de dispositifs, de métadonnées côté dispositif incluant au moins des informations qui indiquent une spécification de données que le dispositif est capable de fournir, auprès d'une unité de mémorisation de métadonnées côté dispositif (141) configurée pour mémoriser les métadonnées côté dispositif ;
l'acquisition, par l'ordinateur, pour une application qui utilise des données pour fournir un service, de métadonnées côté application incluant au moins des informations qui indiquent une spécification de données que l'application exige, auprès d'une unité de mémorisation de métadonnées côté application (140) configurée pour mémoriser les métadonnées côté application ;
l'extraction, par l'ordinateur, d'un dispositif capable de fournir des données qui satisfont à la spécification que l'application exige parmi la pluralité de dispositifs, par la mise en concordance des métadonnées côté application et des métadonnées côté dispositif ;
la détermination si le dispositif extrait est un dispositif virtuel configuré pour générer de nouvelles données sur une base de données obtenues auprès d'un ou plusieurs dispositifs initiaux et délivrer les nouvelles données générées en tant que données virtuelles, ou un dispositif réel ; et
la génération et la transmission, par l'ordinateur, d'une commande de régulation de flux de données qui instruit une transmission de données, sur la base d'un résultat de la mise en concordance,
dans lequel, dans un cas où le dispositif extrait est un dispositif virtuel, la transmission de la commande de régulation de flux de données inclut :

la transmission, à destination du dispositif initial ou d'un appareil qui gère le dispositif initial, d'une première commande de régulation de flux de données instruisant une transmission de données depuis le dispositif initial au dispositif virtuel ; et
la transmission, à destination du dispositif virtuel ou d'un appareil (13) qui gère le dispositif virtuel, d'une deuxième commande de régulation de flux de données instruisant une transmission de données virtuelles depuis le dispositif virtuel à l'application.

6. Programme informatique comprenant des instructions qui, lorsque le programme est exécuté par un ordinateur, amènent l'ordinateur (14) à exécuter les étapes du procédé de régulation de flux de données selon la revendication 5.

# FIG. 1

13 VIRTUAL SENSOR SERVER

131 VIRTUAL SENSOR DB

132 VIRTUAL SENSING DATA GENERATION UNIT

130 DATA INPUT/OUTPUT UNIT

10 REAL SENSOR
10 REAL SENSOR
10 REAL SENSOR

11 SENSOR NETWORK ADAPTOR

SENSING DATA

VIRTUAL SENSING DATA

12 APPLICATION SERVER

12 APPLICATION SERVER

DATAFLOW CONTROL COMMAND 1

DATAFLOW CONTROL COMMAND 2

APP-SIDE METADATA

10 REAL SENSOR
10 REAL SENSOR
10 REAL SENSOR

11 SENSOR NETWORK ADAPTOR

SENSING DATA

APP-SIDE METADATA

DATAFLOW CONTROL COMMAND 3

140 APP-SIDE METADATA DB

142 MATCHING UNIT

143 DATAFLOW INSTRUCTING UNIT

141 SENSOR-SIDE METADATA DB

14 SENSOR NETWORK SERVER

......▶ CASE OF VIRTUAL SENSOR

— · —▶ CASE OF REAL SENSOR

15

# FIG. 2

## (A) Sensor-side Metadata Management Table

| Sensor ID | Sensor Class | Sensor Type | Network Address | Sensing Object | Sensing Area | Sensing Time | Data Type | Data Reliability | Data Provider ID | Price | ... |
|---|---|---|---|---|---|---|---|---|---|---|---|
| R001 | real sensor | position sensor | ... | position of intersection | Tokyo A intersection | 00:00-24:00 | GPS | High | ... | ... yen | ... |
| R002 | real sensor | image sensor | | intersection | Tokyo A intersection | 00:00-24:00 | still image/moving image | High | ... | ... yen | ... |
| R003 | real sensor | position sensor | ... | position of intersection | Tokyo B intersection | 00:00-24:00 | GPS | High | ... | ... yen | ... |
| R004 | real sensor | image sensor | ... | intersection | Tokyo B intersection | 00:00-24:00 | still image/moving image | High | ... | ... yen | ... |
| R005 | real sensor | temperature sensor | ... | air temperature | Central Entrance, Kyoto Station | 06:00-23:00 | temperature | Moderate | ... | ... yen | ... |
| R006 | real sensor | temperature sensor | ... | air temperature | Hachijo Entrance, Kyoto Station | 06:00-23:00 | temperature | Moderate | ... | ... yen | ... |
| R007 | real sensor | temperature sensor | ... | air temperature | 1st Floor, Kyoto Tower | 06:00-23:00 | temperature | Moderate | ... | ... | ... |
| ... | ... | ... | ... | ... | ... | ... | ... | ... | ... | ... | ... |
| V001 | virtual sensor | speed sensor | ... | passing vehicles | Tokyo road b/w AB | 00:00-24:00 | speed | Moderate | ... | ... yen | ... |
| V002 | virtual sensor | avg. air temp. sensor | ... | air temperature | around Kyoto Station | 06:00-23:00 | temperature | Moderate | ... | ... yen | ... |
| ... | ... | ... | ... | ... | ... | ... | ... | ... | ... | ... | ... |

## (B) APP-side Metadata Management Table

| App ID | App Type | Network Address | Sensing Object | Sensing Area | Sensing Time | Data Type | Data Reliability | Data User ID | Price | ... |
|---|---|---|---|---|---|---|---|---|---|---|
| A001 | traffic congestion prediction | ... | intersection | Tokyo A intersection | 09:00, 12:00, 15:00, 18:00 | image | Moderate | ... | ... yen | ... |
| A002 | weather app | ... | air temperature | around Kyoto Station | 10:00, 17:00 | temperature | ~ | ... | ... yen | ... |
| ... | ... | ... | ... | ... | ... | ... | ... | ... | ... | ... |

EP 3 385 852 B1

# FIG. 3

(A) Virtual Sensor Class Management Table

| Virtual Sensor Class No. | Virtual Sensor Type | Input Data Count | Input Number | Input Sensor Type | Input Sensor ID | Sensor Contribution Rate | Definer ID | Virtual Sensor Function | ... |
|---|---|---|---|---|---|---|---|---|---|
| VC001 | speed sensor | 4 | 1 | position sensor | - | 0.2 | ... | speed $v=(p2-p1)/t2-t1$ | ... |
| | | | 2 | image sensor | - | 0.3 | | | |
| | | | 3 | position sensor | - | 0.2 | | | |
| | | | 4 | image sensor | - | 0.3 | | | |
| VC002 | avg. air temp. sensor | 3 | 1 | temperature sensor | - | 0.34 | ... | avg. air temp. $ta=(t1+t2+t3)/3$ | ... |
| | | | 2 | temperature sensor | - | 0.33 | | | |
| | | | 3 | temperature sensor | - | 0.33 | | | |
| ... | ... | ... | | ... | | ... | ... | ... | ... |

(B) Virtual Sensor Instance Management Table

| Sensor ID | Virtual Sensor Class No. | Virtual Sensor Type | Input Data Count | Input Number | Input Sensor Type | Input Sensor ID | Sensor Contribution Rate | Definer ID | Virtual Sensor Function | Sensing Area | ... |
|---|---|---|---|---|---|---|---|---|---|---|---|
| V001 | VC001 | speed sensor | 4 | 1 | position sensor | R001 | 0.2 | ... | speed $v=(p2-p1)/t2-t1$ | Tokyo road b/w AB | ... |
| | | | | 2 | image sensor | R002 | 0.3 | | | | |
| | | | | 3 | position sensor | R003 | 0.2 | | | | |
| | | | | 4 | image sensor | R004 | 0.3 | | | | |
| V002 | VC002 | avg. air temp. sensor | 3 | 1 | temperature sensor | R005 | 0.34 | ... | avg. air temp. $ta=(t1+t2+t3)/3$ | around Kyoto Station | ... |
| | | | | 2 | temperature sensor | R006 | 0.33 | | | | |
| | | | | 3 | temperature sensor | R007 | 0.33 | | | | |
| ... | ... | ... | | ... | | ... | ... | ... | ... | ... | ... |

# FIG. 4

START

S40 — ACQUIRE APP-SIDE METADATA

S41 — EXTRACT APPROPRIATE SENSOR BY MATCHING METADATA

S42 — EXTRACTED SENSOR IS VIRTUAL SENSOR?

REAL SENSOR

S43

VIRTUAL SENSOR

S44 — TRANSMIT DATAFLOW CONTROL COMMAND FROM ORIGINAL SENSOR TO VIRTUAL SENSOR

TRANSMIT DATAFLOW CONTROL COMMAND FROM EXTRACTED REAL SENSOR TO APP

S45 — TRANSMIT DATAFLOW CONTROL COMMAND FROM VIRTUAL SENSOR TO APP

END

# FIG. 5

(A) Dataflow control command 1 instructing data transmission from original sensor to virtual sensor

| Dataflow Control Command ID | Original Sensor ID | Network Address of Original Sensor | Virtual Sensor ID | Network Address of Virtual Sensor | Time Information | : |
|---|---|---|---|---|---|---|
| C003 | R005, R006, R007 | ... | V002 | ... | 09:30, 16:50 | : |

(B) Dataflow control command 2 instructing data transmission from virtual sensor to app

| Dataflow Control Command ID | Virtual Sensor ID | Network Address of Virtual Sensor | App ID | Network Address of App | Time Information | : |
|---|---|---|---|---|---|---|
| C002 | V002 | ... | A001 | ... | 10:00, 17:00 | : |

(C) Dataflow control command 3 instructing data transmission from real sensor to app

| Dataflow Control Command ID | Sensor ID | Network Address of Sensor | App ID | Network Address of App | Time Information | : |
|---|---|---|---|---|---|---|
| C003 | R002 | ... | A001 | ... | 09 : 00, 12 : 00, 15 : 00, 18 : 00 | : |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2801962 A1
- JP 2007300571 A

- WO 2014041826 A

**Non-patent literature cited in the description**

- **ANKUR DESHWAL ; SOMA KOHLI ; CHETHAN .K.P.** Advanced Internet and Cloud pertains wireless sensors. *First IEEE International Conference on Communications in China*